# EUROPÄISCHE PATENTSCHRIFT

(11) **EP 0 905 209 B1**
(45) Veröffentlichungstag und Bekanntmachung des Hinweises auf die Patenterteilung: **02.01.2003**
(21) Anmeldenummer: 98117612.6
(22) Anmeldetag: 17.09.1998
(51) Int. Cl.: C09J 7/02, C09J 123/16, B60J 11/00

(54) **Selbstklebende Schutzfolie mit Olefinkautschuk-Kleber**
Autoadhesive protection foil with olefin rubber adhesive
Feuille de protection adhésive ayant un adhésif caoutchouc oléfinique

(30) Priorität: 27.09.1997 DE 19742805
(43) Veröffentlichungstag der Anmeldung: 31.03.1999
(73) Patentinhaber: Tesa AG, 20253 Hamburg (DE)
(72) Erfinder: Müssig, Bernhard, Dr., 21218 Seevetal (DE)

(56) Entgegenhaltungen:
- EP-A- 0 661 364
- WO-A-96/37568
- US-A- 4 404 056
- US-A- 5 643 676

## Beschreibung

Die Erfindung betrifft eine selbstklebende Schutzfolie zum Schutz des frischen Abschlußlacks von Fahrzeugen wie Automobilen und zum Schutz von frisch lackierten Fahrzeugteilen gegen Verschmutzungen und Beschädigungen während der Montage, des Transports und der Lagerung sowie ihre Verwendung an Fahrzeugen, im speziellen an Automobilen.

Die Konservierung und der Schutz von Kraftfahrzeugen während des Transports vom Hersteller zum Händler wird schon seit geraumer Zeit praktiziert.
Bekannt ist, daß zum Konservieren von Automobilen Paraffinwachse in der Stärke von 5 bis 20 µm aufgetragen werden. Es hat sich aber gezeigt, daß insbesondere bei waagerecht liegenden Flächen der Fahrzeuge eine derart dünne und zumeist ungleichmäßige Schicht gegen äußere Einflüsse, wie beispielsweise die ätzende Wirkung von Vogelkot, nicht genügend Schutz bietet.

Ein erheblicher Nachteil der Paraffinwachsversiegelung ist die notwendige Entkonservierung mittels Dampfstrahl, Tensiden oder Lösungsmitteln. Die umweltge-rechte Rückgewinnung und Entsorgung der Rückstände verursachen einen großen apparativen Aufwand sowie sehr hohe Kosten.

Selbstklebende Oberflächenschutzfolien für Kraftfahrzeuge sind ebenfalls seit einiger Zeit bekannt. In den meisten Fällen handelt es sich dabei um permanent klebende Schutz- und Dekorfolien, wie zum Beispiel eine Steinschlagschutzfolie. Diese Selbstklebefolien verbleiben nach ihrer Montage permanent am Fahrzeug.

Reversibel klebende Selbstklebefolien zum Schutz des Automobils während des Transports haben bisher nur in einigen Sonderfällen ohne großen Erfolg Verwendung gefunden. Aufgabe der Erfindung war es, hier Abhilfe zu schaffen, insbesondere eine selbstklebende Schutzfolie zu schaffen, die die Nachteile des Stands der Technik nicht oder zumindest nicht in dem Umfang aufweist. Gelöst wird diese Aufgabe durch eine selbstklebende Schutzfolie, wie sie in den Patentansprüchen näher gekennzeichnet ist.

### Beschreibung der Erfindung

Bei der erfindungsgemäßen Klebefolie handelt es sich um eine Schutzfolie zur Anwendung auf lackierten Fahrzeugen, insbesondere von Automobilen, insbesondere mit einem Kleber aus einem im wesentlichen amorphen Copolymer aus mindestens zwei verschiedenen α-Olefin-Monomeren mit einer Anzahl von jeweils 2 bis 12 Kohlenstoffatomen sowie mindestens einem Dien als Comonomeren, wobei kein α-Olefin einen Anteil **an der gesamten Klebemasse** von 75 Mol-% oder mehr haben soll, und mit einer Verklebungsfestigkeit von 0.2 bis 2.8 N/cm, vorzugsweise 0.3 bis 1.5 N/cm auf Stahl (Methode AFERA 4001 entsprechend DIN EN 1939). Die Zahl der Kohlenstoffatome der α-Olefine liegt zwischen 2 und 12. Beispiele sind lineare Alkene wie Ethylen, Propen, Buten-(1), Hexen-(1), Octen-(1) sowie Isoalkene wie 3-Methylbuten-(1) oder 4-Methylpenten-(1). Als Diene sind die für die Herstellung von EPDM-Kautschuk üblichen geeignet, wie z. B. 1,4-Hexadien, Dicyclopentadien oder insbesondere 5-Ethyliden-2-norbornen (ENB). Der Anteil an Dien **in der Klebemasse** liegt vorzugsweise zwischen 0,5 und 10 Gew.-%. Der Anteil der weiteren Comonomeren (dritten und ggf. sonstigen) soll insbesondere unter 30 Mol-% liegen, wenn es sich dabei um nichtolefinische Comonomeren handelt. Diese können polar sein, wie z. B. Vinylacetat, Ester der Acryl- oder Methacrylsäure, Vinylchlorid, Vinylether oder Acrylnitril, oder unpolar wie z. B. Isobuten, Styrol oder α-Olefin.

Die Mooney-Viskosität ML (1+4) 125 °C soll unter 50 liegen, vorzugsweise unter 30, damit die Viskosität der Schmelze oder Lösung nicht zu hoch liegt. Sie wird nach ASTM D 1646 geprüft.

Es ist vorteilhaft, die Klebemasse zu vernetzen. Dadurch steigt die Wärmebeständigkeit (z. B. bei Wechselklima); das Aufziehen auf rauhe Untergründe oder unpolare Untergründe wie Fensterdichtungen aus Olefinkautschuk wir reduziert. Für die Vernetzung sind die für EPDM-Kauschuk üblichen Vernetzungsmittel geeignet. Bevorzugt wird das Verfahren der Strahlenvernetzung, insbesondere mit UV- und Elektronenstrahlen. Im Fall von UV-Strahlen wird die Klebemasse von der Klebemassenseite bestrahlt. Durch die Anwendung von Photoiniatoren oder durch Zugabe von Vernetzungspromotoren wie Estern des Allylalkohols, der Methacrylsäure oder der Acrylsäure zur Klebemasse kann die Strahlungsdosis verringert werden.

Ein zu hoher Anteil an polaren nicht-olefinischen Monomeren erhöht jedoch die Klebkraft auf lackiertem Fahrzeugblech nach Wechselklimalagerung. Es ist daher vorteilhaft, In **dem Copolymer** den Anteil an polaren Comonomeren unter 20 Mol-% zu halten, insbesondere darauf ganz zu verzichten, in diesem Fall handelt es sich dann um ein Copolymer aus mindestens drei unpolaren Monomeren.

Der Anteil **an der gesamten Klebemasse** jedes der α-olefinischen Monomeren soll unter 75 Mol-% liegen, günstiger ist ein Anteil von maximal 65 Mol-%. Am besten sind Terpolymere aus drei α-Olefinen geeignet, deren Anteil an α-olefinischen Monomeren jeweils zwischen 5 und 60 Mol-% liegt. Durch Begrenzung des Anteils einzelner Monomere werden erhöhte Klebkräften nach Wechselklimalagerung, schwacher Tack bei der Applikation sowie Deformation des Lackes vermieden. Deformation sind visuell erkennbare irreversible Veränderungen der Lackoberfläche, die enstehen, wenn der frische, nicht vollständig ausgehärtete Lack mit einer ungeeignete Schutzfolie abgedeckt wurde.

Zur Optimierung der Eigenschaften, insbesondere des Klebeverhaltens auf speziellen Lacken, kann die zum Einsatz kommende Selbstklebemasse mit einem oder mehreren Additiven wie Klebrigmachern (Harzen), Weichmachern, Füllstoffen, Pigmenten, UV-Absorbem, Lichtschutz-, Alterungsschutzmitteln, Vernetzungsmitteln, Vernetzungspromotoren oder Elastomeren abgemischt sein.

Derartige Elastomere sind z. B. EPM-Kautschuk, Polyisobutylen, Butylkautschuk, hydrierte Blockcopolymere aus Styrol und Dienen oder Acrylatcopolymere. Geeignete Klebrigmacher sind beispielsweise Kohlenwasserstoffharze (z. B. aus ungesättigten C5 oder C7 Monomeren), Terpenphenolharze, Terpenharze aus Rohstoffen wie α- oder β-Pinen, aromatische Harze wie Cumaron-Inden-Harze oder Harze aus Styrol oder α-Methylstyrol, wie Kolophonium und seine Folgeprodukte wie disproportionierte, dimerisierte oder veresterte Harze, wobei Glycole, Glycerin oder Pentaerythrit eingesetzt werden können sowie weitere wie aufgeführt in Ullmanns Enzyklopädie der technischen Chemie, Band 12, S. 525- 555 (4. Aufl.), Weinheim. Besonders geeignet sind alterungsstabile Harze ohne olefinische Doppelbindung wie z. B. hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeingnete UV-Absorber, Lichtschutz- und Alterungsschutzmittel für die Klebemassen sind die selben, die weiter unten für die Stabilisierung der Folie aufgeführt sind.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (z. B. Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone. Besonders geeignet sind alterungsstabile Weichmacher ohne olefinische Doppelbindung geeignet.

Vernetzungsmittel sind beispielsweise Phenolharze oder halogenierte Phenolharze, Melamin- und Formaldehydharze. Geeignete Vernetzungspromotoren sind z. B. Maleinimide, Allylester wie Triallylcyanurat, mehrfunktionelle Ester der Acryl- und Methacryläure.

Für einige Lacksysteme ist es vorteilhaft Bestandteile der Lacke dem Kleber zuzufügen, um die Migration von Lackbestandteilen (z. B Fettsäureester) aus dem Lack in die Klebemasse zu verringern. Derartige Lackbestandteile sind in EP 0 763 584 und US 5 612 135 näher beschrieben.

Darüber hinaus ist es für die stoffliche und thermische Verwertung vorteilhaft, wenn der Kleber, insbesondere die gesamte Schutzfolie, halogenfrei ist.

Als Träger des Klebers dienen thermoplastische Folien, bevorzugt Polyolefinfolien. Diese können z. B. aus Polyethylen, Polypropylen sowie deren Mischungen oder Copolymeren (z.B. Random-Copolymer) bestehen. Für die Trägerfolien sind Dicken von 20 bis 80 µm (ggf. einschl. der Haftvermittlerschicht) geeignet. Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- wie auch in Querrichtung nicht überschreiten. Wegen der Beständigkeit gegen Schrumpf in der Wärme und guter Verformbarkeit sind Copolymere des Propylens besonders geeignet. Zur Verbesserung der Haftung zwischen Folie und Kleber ist die Verwendung einer Haftvermittlerschicht vorteilhaft, aber nicht zwingend erforderlich, die Trägerfolie besteht in einem solchen Fall aus der Basisschicht und der Haftvermittlerschicht. Letztere besteht vorzugsweise aus Polymeren aus überwiegend olefinischen Monomeren und/oder Komponenten von Basisschicht und/oder Kleber. Der Haftvermittler enthält besonders bevorzugt mind. ein Polymer, welches mindestens zu 50 Mol-% ein oder mehreren α-Olefinen besteht. Beispiele hierfür sind thermoplstische EPM- oder EPDM-Elastomere, lonomere auf Basis von Ethylen(meth)acrylsäurecopolymer oder Maleinsäureanhydrid-modifizierte Polyolefine.

Um die Trägerfolie witterungsstabil einzustellen, ist der Zusatz von Lichtschutzmitteln sinnvoll, bei Polyolefinen in der Regel zwingend erforderlich. Die Funktion bei der Anwendung auf die Schutzfolie besteht vorrangig in der Vermeidung der Versprödung der Trägerfolie. Im Fall einer mehrlagigen Trägerfolie bezieht sich der Schutz insbesondere auf die Basisschicht. Derartige Lichtschutzmittel sind bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8, 21; 15, 529, 676 beschrieben. Insbesondere HALS-Lichtschutzmittel wie z. B. die CAS-Nr. 106990-43-6, 65447-77-0, 70624-18-9 oder 52829-07-9 sind für die erfindungsgemäße Schutzfolie geeignet. Die Menge des Lichtschutzmittels sollte mindestens 0.15, vorzugsweise mindestens 0.30, Gew.-% bezogen auf die Trägerfolie betragen. Eine Verwendung von Antioxidanten für die Folie (z. B. Irganox 1010 oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 Seite 5 aufgeführt.

Die für die Folie genannten Lichtschutzmittel können auch bei der Klebemasse angewandt werden. Dieser Zusatz erhöht die Alterungsstabilität der Klebemasse insbesondere bei UV-Belastung über 100 kLy (Kilolangley), ist aber für Anwendungen bis zu 6 Monaten Außenbewitterung in der Regel entbehrlich. Bei den nicht erfindungsgemäßen Klebern aus Polyisobutylen-Homopolymeren oder Butylkautschuken ist ein solcher Zusatz zwingend, wenn bei sehr starker UV-Belastung Klebstoffrückstände verhindert werden sollen.

Eine Verbesserung der Lichtstabilität von Trägerfolie und Kleber ist auch noch durch andere Zusätze in der Schutzfolie, insbesondere der Basisschicht der Trägerfolie, möglich. Dies kann durch UV-Absorber (z.B. Tinuvin P, Ciba) oder vorrangig durch reflektierende Pigmente (z. B. Titandioxid) erfolgen. Die erfindungsgemäße Schutzfolie stellt auf ein hochwertiges Markenprodukt ab und hat daher vorzugsweise eine Durchlässigkeit von UV-Strahlung im Bereich von 290 bis 360 nm von weniger als 1 %, vorzugsweise von weniger als 0.1 %.

Der Haftvermittler kann durch Coextrusion mit der Basisfolie oder durch Coextrusion mit Basisfolie und Kleber oder durch Beschichtung auf der Basisfolie aufgebracht werden.

Eine vorteilhafte Ausführungsform besteht darin, daß der Haftvermittler bei der Extrusion der Folie simultan aufgebracht wird, so daß die erhaltene Coextrusionsfolie nur noch mit dem Kleber beschichtet zu werden braucht. Die technisch beste Lösung für die erfindungsgemäße Schutzfolie ist die simultane Coextrusion von Folie und Kleber (ggf. einschließlich einer Haftvermittlerschicht).

Die besondere Bedeutung dieser Erfindung liegt zwar auch in dem Herstellverfahren der Schutzfolie und in der Zusammensetzung der Trägerfolie, aber vorrangig in der Zusammensetzung der erfindungsgemäßen Haftkleberschicht und der Kombination dieser Faktoren.

### Stand der Technik bei Automobilschutzfolien

Bekannte unpolare unvernetzte Selbstklebemassen zeigen im Test, indem sie auf lackierten Blechen aufgebracht sind und dabei einer Wechselklimalagerung unterliegen, eine bessere Lackverträglichkeit als polare Massen. Unter Lackverträglichkeit werden Lackdeformation und leichtes Abziehen nach Wechselklimalagerung verstanden. Auf der anderen Seite sind sie jedoch zu weich (zu wenig kohäsiv) und zeigen Masserückstände beim Abziehen der Folie. Wenn solche Massen daher chemisch oder strahlenvernetzt werden, führen sie zu unerwünschter Lackdeformation. Ein Ausnahmefall stellen Selbstklebemassen auf Naturkautschukharzbasis dar, sie lassen sich bei nur geringer Lackdeformation rückstandsfrei wiederabziehen. Diese Massen sind allerdings unter Einwirkung von UV-Strahlung nicht alterungsstabil. Dies führt zu starken schmierigen oder lackartig verhärteten Rückständen auf dem lackierten Blech nach extremen Beanspruchungen über einen längeren Zeitraum (drei bis sechs Monate), wie sie beispielsweise in Florida auftreten.

Bekannt sind weiterhin Polyacrylatmassen. Unterwirft man unvernetzte Polyacrylatmassen einer Wechselklimalagerung, so zeigen sie eine gute Verträglichkeit mit Lackoberflächen. Auf der anderen Seite sind diese aber so wenig kohäsiv, daß sie beim Abziehen der Folie Rückstände der Klebemasse auf dem Haftgrund hinterlassen. Wenn diese Massen chemisch oder durch Strahlen stark vernetzt werden, lassen sie sich rückstandsfrei abziehen, verursachen aber auf der anderen Seite bleibende Deformationen an der Lackoberfläche und zeigen zum Teil darüberhinaus auch noch eine ungenügende Haftung bei Verklebung auf gewölbten lackierten Flächen.

Aus der japanischen Patentanmeldung JP 02 199 184 ist ein strahlenvemetzbarer Haftklebstoff bekannt, bei dem für die Schutzanwendung auf Lackschichten eine niedrige Glasübergangstemperatur eingestellt werden muß, um bleibende Verformungen der Lackschicht zu verhindern. Hier treten Probleme wegen mangelnder Haftfestigkeit der Selbstklebefolie auf den Kraftfahrzeugen während der Applikation und des Transports auf.

Dies gilt auch für Acrylate, wie sie in der US 5 612 136 beschrieben sind. Das dort angemeldete Verfahren der Bestrahlung schädigt zudem die Folie, so daß deren Bewitterungsstabilität herabgesetzt ist, wenn man dabei solange bestrahlt, bis die Restmonomere durch Polymerisation vollständig abgebaut sind. Bei geringeren Bestrahlungsdosen ist der Gehalt an Restmonomeren so hoch, daß diese in den Fahrzeuglack einwandern und ihn dadurch anquellen. Ein weiterer Nachteil ist die Migration von Photoinitiatoren in den Lack, wo sie der dessen UV-Stabilität herabsetzen.

Die europäische Patentanmeldung EP 0 519 278 offenbart zum Schutz von Auto-mobilen eine Folie, die aus einem Träger besteht, der mit einem Haftklebstoff auf Kautschukbasis, insbesondere Polyisobutylen, der ein dynamisches Elastizitäts-modul von 2 x 10⁵ bis 7 x 10⁶ dyn/cm², dies entspricht in Sl-Einheiten einem Wert von 2 x 10⁴ bis 70 x 10⁴ Pa, bei 60 °C aufweist, beschichtet ist. Anwendungstechnische Versuche mit einer derartigen Selbstklebefolie zeigen eine relativ gute Verträglichkeit mit Lackoberflächen. Die Haftfestigkeit nach Wechselklimalagerung auf in der Automobilindustrie gebräuchlichen Lacken ist jedoch so gering, daß die in der Praxis geforderte Verklebungsfestigkeit nicht immer ausreichend gegeben ist. Insbesondere bei Feuchteeinfluß auf die Folie ist die Haftfestigkeit häufig derart reduziert, daß sich die Folie während des Transports der mit ihr geschützten Fahrzeuge von diesen ablöst, so daß keine Schutzwirkung mehr vorhanden ist. Darüber hinaus weist die Selbstklebemasse keine Verträglichkeit mit den im Automobilbau üblichen Dichtungsgummis (Dichtungsprofilen) auf; beim Abziehen der Schutzfolie von Fensterprofilen verbleiben auf dem Gummi Masserückstände der Klebebeschichtung. Nach dem Abziehen der Schutzfolie bleiben Ränder mit Kleberresten zurück, die auf Abbau des Klebers durch UV-Bewitterung zurückzuführen sind.

Die JP 95-325285 beschreibt ein ähnliches Produkt. Als Klebemasse wird ebenfalls Polyisobutylen vorgeschlagen, welches jedoch Butylkautschuk (Polyisobutylen mit Doppelbindungen) enthalten kann.

In der europäischen Patentanmeldung EP 0 592 913 ist eine Oberflächenschutzfolie für den Transport von Automobilen beschrieben, die sich aus einem Copolymerisat aus ungesättigten, polaren Comonomeren und α-Olefinen zusammensetzt, insbesondere aus EVAc. Das Aufbringen einer zusätzlichen Klebebeschichtung erfolgt bei dieser Schutzfolie nicht. Eine derartige Folie weist einen zugegebenermaßen einfachen Aufbau auf, zeigt aber in ihrer Verwendung deutliche Nachteile. Die Klebkraft ist sehr gering, dieser Mangel kann durch Erwärmen bei der Applikation beseitigt werden. Auch führen diese Folien, wenn sie nicht mit einer Schutzschicht oder einer trennenden Eindeckung versehen sind, zum Verblocken, wie die EP 0 768 356 lehrt. Besonders schwer wiegt, daß die beschriebenen Folien sehr starke Lackdeformation und sehr schweres Abziehen nach Gebrauch aufweisen.

Die Aufgabenstellung bestand also darin, eine Klebefolie zu finden, die eine hinreichend hohe Anfangsverklebungsfestigkeit besitzt, damit beim Verkleben unter Spannung (Applizieren der Klebefolie an gewölbte Flächen) keine Ablösung auftritt und nach längerer Lagerung (bis zu einem Jahr unter Bewitterung) trotzdem wieder leicht abziehbar ist. Dementsprechend hat es nicht an Versuchen gefehlt, diesen Mangel abzustellen. Die in DE 195 32 220 beschriebene Klebefolie mit EVAc-Kleber ist dem in der EP 0 592 913 beschriebenen Produkt deutlich überlegen, weist aber beim Abziehen nach Gebrauch noch eine zu hohe Verklebungsfestigkeit auf, um die Klebefolie ohne Abrisse und ohne Überanstrengung des Anwenders abgezogen werden zu können. Bei Einkomponenten-Lacken tritt außerdem Lackdeformation auf.

Die Erhöhung der Verklebungsfestigkeit, vom Fachmann Aufziehen genannt, nach Klimalagerung ist durch Wechselwirkungen des Klebers, insbesondere polare Kräfte, mit dem Lack bedingt. Der Fachmann vermeidet daher polare Comonomere wie Acrylat oder Vinylacetat. Das in der bereits genannten EP 0 519 278 erwähnte Polyisobutylen ist ein in dieser Hinsicht geeigneter Kleber. Nachteilig ist jedoch das Alterungsverhalten. Polyisobutylene sind bekanntermaßen weich (wenig kohäsiv), insbesonderer nach Alterung durch Wärme oder UV-Strahlung. Dies führt zu Rückständen auf dem Lack nach dem Wiederabziehen. Aus diesem Grund ist die im Markt befindliche Klebefolie auf Basis Polyisobutylen die Folien stark pigmentiert, der Zersetzende Einfluß von Licht soll vom Kleber möglichst fernguhalten werden. Im Kantenbereich wird der Kleber jedoch direkt dem UV-Licht ausgesetzt, was dort zu starken Rückständen führt. Dies versucht man durch den Zusatz von Antioxidantien und HALS-Lichtschutzmitteln im Polyisobutylen zu vermeiden, diese Additive sind in der US 5 601 917 beschrieben.

Wesentlich UV-stabiler sind Kleber aus hydrierten Styrol-Dien-Blockcopolymeren, deren Anwendung im Gebrauchsmuster DE 296 04 473 U 1 beschrieben sind. Ein wesentlicher Nachteil solcher Blockcopolymere ist deren thermisch reversible Vernetzung über die Styroldomänen. Zieht man eine daraus hergestellte Klebefolie im Sommer von einem in der Sonne erwärmten Fahrzeug ab, bleibt der Kleber zum großen Teil auf dem Lack haften, weil die Kohäsion der Klebemassen geringer als die der Haftung auf dem Lack ist. Eine Erwärmung führt zum Schrumpf der Schutzfolie, der in der Wärme weiche Kleber schmiert daher an den sich zurückziehenden Kanten der Klebefolie auf das Blech ab.

EP 0 661 364 beschreibt einen Oberflächenschutzfilm mit einer Klebemasse, die einen "strong initial tack" (S. 2, Z. 6) aufweist und damit für die Zwecke der vorliegenden Erfindung ungeeignet ist; auf Seite 3 und 6 werden Verklebungsfestigkeiten auf Stahl bis zu 1 kg/25 mm beschrieben, was in etwa Klebkräften auf Stahl nach AFERA bis 4,0 N/cm entspricht. Für die Limitierung des Aufziehverhaltens bei Außenbewitterung bzw. Wechselktimalagerung ist eine Begrenzung des Anteils an polaren Comonomeren insgesamt und die Begrenzung des Anteils jedes einzelnen α-Olefin-Monomeren wichtig, welche die zitierte Erfindung nicht vornimmt. Die beschriebenen Folien sind zudem nicht lichtstabil, da keine Maßnahmen wie der Zusatz von HALS-Lichtschutzmitteln oder lichtreflektierender Pigmente zur Erreichung einer für diese Anwendung notwendigen Lichtstabilisierung ergriffen werden. Die Verwendung von Schutzfolie auf der Außenseite von Fahrzeugen stellt besonders extreme Anforderungen in Bezug auf Lichtstabilität, insbersondere im IV-Bereich, so daß derartige Schutzfolien auch aus diesem Grund für diese Anwendung völlig ungeeignet sind. Bei der Applikation auf Fahrzeugen spielt die Dehnbarkeit der Folie wegen gewölbter Flächen eine wichtige Rolle, die zitierte Erfindung hebt jedoch auf die Eignung für ebene Flächen ("plates" und "boards") ab und versucht daher auch nicht die Kraft bei 10 % Dehnung zu limitieren.

Die WO 96/37568 beschreibt die Verwendung von Polyhexen bzw. Polyocten für einen unpolaren Haftkleber. Die in den Beispielen beschriebenen Polymere weisen zwar ein geringes Aufziehen auf, wegen der geringen Kohäsion, bedingt durch das niedrige Molekulargewicht derartiger handelsüblicher Polymere, führen diese Polymere aber ebenfalls zu Rückständen, die man durch Zugabe anderer Polymere, dort cold flow restricting agent genannt, zu vermeiden versucht. Für die Praxis sind die genannten Kleber trotzdem noch zu wenig kohäsiv (weich), was nach Bewitterung zu Rückständen führt, insbesondere wenn das Klebeband durch Wärmeeinwirkung schrumpft.

### Eigenschaften der erfindungsgemäßen Schutzfolie

Für den Fachmann überraschend und nicht vorhersehbar, zeigt eine Klebemasse, die im wesentlichen aus einem Copolymer aus mindestens drei Monomeren, davon mindestens zwei α-Olefinen mit jeweils 2 bis 12 Kohlenstoffatomen mit einem Anteil von jeweils unter 75 Mol-% sowie mindestens einerr. Dien besteht, die angestrebten Eigenschaftskombination:
- geringes Aufziehen
- gute UV-Beständigkeit
- keine Lackdeformation
- hinreichende Verklebungsfestigkeit bei Applikation auf gewölbten Flächen
- hohe Kohäsion (keine Rückstände beim Abziehen oder beim Schrumpf der Schutzfolie)

Insbesondere die sehr hohe Witterungsstabilität (Beständigkeit gegen UV-Licht) ist eine völlig überraschende Eigenschaft.

Diese Selbstklebemassen weisen auf der einen Seite eine gute Haftfestigkeit auf verschiedenen in der Automobilindustrie gebräuchlichen Lacken eine gute Haftfestigkeit auf, auch unter Feuchte- oder Feuchtklimaeinfluß, so daß sich die Schutzfolie auch unter Windeinwirkung oder unter Spannung durch Verklebung auf gewölbten Flächen sich nicht vom Fahrzeug ablöst. Darüber hinaus zeigt die Selbstklebemasse eine hinreichende Verklebungsfestigkeit innerhalb der ersten Minuten nach Applikation auf, so daß die Schutzfolie bereits nach einer halben Stunde zum Beispiel einer starken Fahnwindbelastung (bis zu 160 km/h) ausgesetzt werden kann, ohne andererseits nach längerem Gebrauch schwer entfernbar zu sein. Weiterhin ist durch die erfindungsgemäße Selbstklebemasse eine sehr geringe Abrollkraft gewährleistet. Insbesondere auf einer 65 µm dicken Folie, die überwiegend aus EP-Copolymer besteht, zeigt die erfindungsgemäße Selbstklebemasse auf mit Polyurethan lackierten und für 30 Minuten bei 130 °C wärmebehandelten Blechen nach einer Wechselklimalagerung, wie sie in Beispiel 1 dieser Beschreibung näher ausgeführt ist, keine Lackdeformation.

Die Abzugskraft der erfindungsgemäßen Schutzfolie von 2 K-PU-Lacken liegt frisch über 0.1 und nach Wechselklimalagerung unter 3 N/cm (analog Methode AFERA 4001). Auch die Bestrahlung der Schutzfolie mit UV-Licht, beispielsweise mit Xenotest 1200 @ 55 °C über 3000 Stunden, führt zu keinen Mängeln in den Eigenschaften der Schutzfolie. Es tritt keine Versprödung der Folie auf, die Selbstklebemasse verursacht weder Lackdeformationen oder Lackverfärbungen noch treten Masserückstände beim Abziehen der Schutzfolie auf.

Die erfindungsgemäße Schutzfolie ist somit besonders zum Montage- oder Transportschutz des frischen Abschlußlacks von Automobilen oder als Bearbeitungs- und Transportschutz von frisch lackierten Stahlblechen geeignet. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht vollständig ausgehärtet ist. Weiterhin zeigt die Schutzfolie auch bei der Verwendung als Kantensicherungsband zur zusätzlichen Befestigung großflächiger selbstklebender Abdeckfolien hervorragende Eigenschaften.

Darüber hinaus zeichnet sich die erfindungsgemäße Schutzfolie dadurch aus, daß sie bei Automobilen in großer Breite über Motorhaube, Dach und Kofferraum applizierbar ist und sich aufgrund ihrer Verformbarkeit planen und sogar leicht gewölbten geformten Flächen sehr gut anpaßt. Damit ist der Schutz der am stärksten durch Verschmutzung gefährdeten horizontalen Flächen möglich. Aber auch schmale Bereiche wie zum Beispiel der Türvorsprung unter den Fenstern oder Stoßfänger können leicht abgedeckt werden. Der Schutz der vertikalen Flächen am Fahrzeug bietet sich besonders während der Montage derselben an.

Die Schutzfolie ist beständig gegen Sonnenlicht, Feuchtigkeit, Hitze und Kälte, wobei die Witterungsstabilität von wenigstens einem halben Jahr gegeben ist. Insbesondere der Zusatz von Titandioxid sowie von Lichtschutzstabilisatoren führt zu einer Verbesserung der UV-Beständigkeit der Schutzfolie. Auch höchste Sonneneinstrahlungsquoten, wie sie beispielsweise in Florida auftreten, führen nicht zu einem Versagen oder Ablösen der Schutzfolie, zumindest nicht in einen Zeitraum von sechs Monaten.

Nach Anwendung der Schutzfolie treten durch die Selbstklebemasse nach einer Lagerung für 14 Tage bei wechselnden Temperaturen sowie unter Witterungseinfluß keine Deformationen der darunter liegenden Lackschicht auf. Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen.

Nach Gebrauch ist die Schutzfolie trotz der geforderten guten Haftfestigkeit rückstandsfrei und ohne Reißen der Trägerfolie abziehbar. Selbst auf Dichtungs-gummis, wie sie bei Automobilen vielfach Anwendung finden, verbleiben nach dem Abziehen keine Kleberrückstände. Die stoffliche oder energetische Verwertung der Schutzfolie ist möglich, insbesondere wenn selbige halogenfrei ist.

Im folgenden soll die Erfindung anhand von Beispielen erläutert werden, ohne diese damit allerdings einschränken zu wollen.

### Beispiele

### Beispiel 1

Eine Folie wird durch Flachfolienextrusion in 1450 mm Breite gefertigt. Sie besteht aus einer 50 µm dicken Basisschicht und einer 15 µm dicken Haftvermittlerschicht. Die Basisschicht besteht aus 60 Gew.-Teilen aus PP-Homopolymer, 30 Gew.-Teilen LLDPE, 10 Gew.-Teilen Titandioxid und 0.3 Gew.-Teilen eines HALS-Stabilisators (Tinuvin 770). Die Haftvermittlerschicht besteht aus einem Compund von aus 30 Gew.-Teilen aus PP-Homopolymer, 20 Gew.-Teilen LLDPE und 50 Gew.-% des unten als Kleber beschriebenen Polymers.

Die Folie weist folgende physikalischen Eigenschaften auf:

| | | |
|---|---|---|
| Gesamtdicke Folie mit Haftvermittler | 65 µm | DIN 53370 |
| Gesamtgewicht Folie mit Haftvermittler | 63 g/m² | DIN 53365 |
| Zugfestigkeit längs | 30 N/mm² | DIN 53455-7-5 |
| Kraft bei 10 % Dehnung längs | 19 N/15mm | DIN 53455-7-5 |
| Zugfestigkeit quer | 20 N/mm² | DIN 53455-7-5 |
| Dehnung längs | 450 % | DIN 53455-7-5 |
| Dehnung quer | 450 % | DIN 53455-7-5 |
| Schlagzugzähigkeit längs | 3000 mJ/mm² | DIN 53448 |
| Schlagzugzähigkeit quer | 200 mJ/mm² | DIN 53448 |

Als Kleber wird eine 10 %ige Lösung eines Copolymeren, bestehend aus je 48 Gew.-% Propen und Ethylen und 4 Gew-% 5-Ethyliden-2-norbomen, mit einer Mooney-Viskosität ML (1+4) 125 °C von 28in Toluol hergestellt, mit einem Streichbalken auf die Folie aufgetragen und bei 80 °C in einem Kanal vier Minuten lang getrocknet. Die erhaltene Schutzfolie wird am Rand besäumt und zu 200 m langen und 1400 mm breiten Rollen gewickelt. Der Kleberauftrag beträgt 20 µm. Die Mooney-Viskosität M_{L} (1+8) @ 125 °C wurde mit 35 ermittelt.

Die so hergestellte Selbstklebefolie läßt sich leicht und faltenfrei abwickeln und beim Gebrauch zum Schutz von Automobilen einwandfrei applizieren. Wegen des guten Tacks und leichter Korrigierbarkeit können die Verklebungsprozesse beschleunigt werden. Nach Gebrauch kann die Selbstklebefolie bis zu einem halben Jahr Verklebungsdauer unter Außenbewitterung ohne Mängel wieder abgezogen werden.

Die Schutzfolie ist durch die in der folgenden Tabelle wiedergegebenen physikalischen Eigenschaften gekennzeichnet.

| | |
|---|---|
| Gesamtdicke Schutzfolie: | 80 µm |
| Klebkraft vom 2K-PU-Lack nach 14 Tagen Wechselklima (Zyklus 2 wie unten angegeben), einem Abzugswinkel von 180° und einer Abzugsgeschwindigkeit von 300 mm/min: | 1,4 N/cm |
| Klebkraft von der Rückseite bei einem Abzugswinkel von 180° und einer Abzugsgeschwindigkeit von 300 mm/min: | 0,1 N/cm |
| Klebkraft auf Stahl | 0,3 N/cm |
| Klebkraft auf Lack | 0,3 N/cm |

Das Wechselklima besteht aus folgenden Zyklen:

| Zyklus 1 | | Zyklus 2 | |
|---|---|---|---|
| Dauer [h] | Temperatur [°C] | Dauer [d] | Temperatur [°C] |
| 4 | 80 | 3 | 90 |
| 4 | -30 | plus 4mal Zyklus 1 | |
| 16 | 40 bei 100% rel. Feuchte | | |

Der Zyklus 2 wird dabei insgesamt zweimal wiederholt.
Die Schutzfolie wurde auf frisch lackierten Blechen (2K-PU-Lack) verklebt und nach einer Woche abgezogen; Deformation des Lackes waren nicht erkennbar. Auf Lack verklebte Muster wurden mit 97 kLy bewittert, nach dem Abziehen waren keine Rückstände in der Fläche und im Kantenbereich zu erkennen.

### Beispiel 2

Eine Folie wurde analog Beispiel 1 hergestellt, wobei die Basisschicht aus 80 Gew.-Teilen eines PP-Randomcopolymeren mit 5,5 % Ethylen (Novolen 3300 MC, BASF), 10 Gew.-Teilen LLDPE, 7 Gew.-Teilen Titandioxid und 0.45 Gew.-Teilen eines HALS-Lichtschutzmittels (Chimassorb 944, Ciba) besteht und die Haftivermittlerschicht zu 20 Gew.-·Teilen des PP-Randomcopolymeren und 80 Gew.-Teilen LLDPE besteht. Diese Folie wurde analog Beispiel 1 beschichtet. Als Kleber dient ein Polymer wie in Beispiel 1, jedoch mit einem Zusatz von 5 Gew.-% Regalrez ™ 116 (Tackifier, Hercules), 10 Gew.- % Levapren 700 (VA-Elastomer, Bayer), 0.5 Gew.-% Irgacure 651 (Ciba), 1.5 Gew.-% Trimethylolpropantriacrylat, 0.2 Gew.-% Irganox 1010 (Ciba) und 0.3 Gew.-% Tinuvin 770 (Ciba). Der Kleberauftrag beträgt 16 µm. Die Schutzfolie wurde auf der Kleberseite unter Stickstoff mit einer UV-Lampe (Hg-Mitteldrucklampe 120 W/cm) im Abstand von 10 cm vernetzt, die Geschwindigkeit belief sich bei 10 m/min.

Die Folie weist bei 10 % Dehnung in Längsrichtung eine Kraft von 14 N/15 mm auf. Die Klebkraft auf Stahl beträgt 0.9 N/cm, auf Lack 0.9 N/cm (frisch) bzw. 2.6 N/cm (nach Wechselklimalagerung). Die Schutzfolie wurde auf frisch lackierten Blechen (2K-PU-Lack) verklebt und nach einer Woche abgezogen; im Kantenbereich sind geringfügige Deformationen des Lackes erkennbar. Auf Lack verklebte Muster wurden mit 97 kLy bewittert, nach dem Abziehen waren keine Rückstände in der Fläche und im Kantenbereich zu erkennen.

### Beispiel 3

Die Schutzfolie wurde durch Coextrusion von drei Schichten einschließlich Kleber hergestellt. Die Basisschicht besteht aus den Rohstoffen wie im Beispiel 3 beschrieben. Der Haftkleber war ein Polymer aus 59 Gew.-% Ethylen, 37 Gew.-% Propen und 4 Gew.-% 5-Ethyliden-2-norbomen (granuliert und mit amorpher Kieselsäure gepudert) mit einer Mooney-Viskosität ML (1+4) 125 °C von 22 und Zusatz von 0.2 Gew.-% Irganox 1010 (Ciba) und 3 Gew.-% Escorez 5000 flüssig (Weichmacher, Exxon).

Der Extruder für die Basisschicht wurde mit den in Beispiel 2 genannten Rohstoffen beschickt, der der Kleberschicht mit dem granulierten gepuderten Terpolymer und der Extruder für die dazwischenliegende Haftvermittlerschicht mit einer Mischung aus 50 Gew.-Teilen recycelter Schutzfolie aus Beispiel 1 und 50 Gew.-Teilen granulierten Klebers aus diesem Beispiel.

Die Klebkraft der erhaltenen Schutzfolie beträgt auf Stahl 0.2 N/cm, auf Lack 0.2 N/cm (frisch) bzw. 1,4 N/cm (nach Wechselklimalagerung). Die Schutzfolie wurde auf frisch lackierten Blechen (2K-PU-Lack) verklebt und nach einer Woche abgezogen; Deformation des Lackes waren nicht erkennbar.

Gleichartige verklebte Bleche wurden einer UV-Alterung unterzogen (1750 h Xenotest 150 entsprechend 97 Kly). Nach Abziehen der Schutzfolie sind keine Rückstände, selbst im Randbereich, erkennbar. Auf Lack verklebte Muster wurden mit 97 kLy bewittert, nach dem Abziehen waren keine Rückstände in der Fläche und im Kantenbereich zu erkennen.

### Vergleichsbeispiele

### Vergleichsbeispiel 1

Die Herstellung erfolgt wie bei Beispiel 1. Als Haftkleber wird ein Copolymer, bestehend aus 80 Mol-% Ethylen und 20 Mol-% Buten-(1), eingesetzt. Als Lösungsmittel wurde heißes Toluol verwendet. Die Klebkraft auf Lack liegt bei 0.2 N/cm (frisch) bzw. 4.9 N/cm (nach Wechselklimalagerung). Die Schutzfolie reißt beim Abziehen vom lackierten Blech ein, wenn man bei einer großflächigen Verklebung an einer Ecke zieht. Eine Schutzfolie gemäß diesem Beispiel zeigt starke Lackdeformation.

### Vergleichsbeispiel 2

Wie Vergleichsbeispiel 1, das Copolymer besteht zu 90 Mol-% aus Ethylen und zu 10 Mol-% aus Buten-(1). Als Lösungsmittel ist heißes Toluol erforderlich. Die Klebkraft auf lackiertem Blech und auf Stahl liegt unter 0.1 N/cm.

### Vergleichsbeispiel 3

Wie Beispiel 1, jedoch mit einem Terpolymer aus 80 Mol-% Ethylen und je 10 Mol-% Propen und Buten-(1). Die Klebkraft auf Lack liegt bei 0.5 N/cm (frisch bzw. 4.2 N/cm (nach Wechselklimalagerung). Die Schutzfolie gemäß diesem Beispiel zeigt starke Lackdeformation.

### Vergleichsbeispiel 4

Wie Beispiel 1, jedoch mit einem Copolymer aus 70 Mol-% Vinylacetat und 30 Mol-% Ethylen. Die Klebkraft auf Stahl beträgt 1.0 N/cm, auf Lack 0.9 N/cm (frisch) bzw. 3.6 N/cm (nach Wechselklimalagerung). Bei Verklebung auf frischem Lack sind starke Deformationen zu beobachten.

### Vergleichsbeispiel 5

Die Herstellung erfolgt analog Beispiel 1, als Kleber wird eine Mischung aus Polyisobutylenen eingesetzt, 25 Gew.-Teile haben ein Molekulargewicht M_{w} von 1.2 Millionen, 75 Gew.-Teile von 35 Tausend. Die Klebkraft auf Lack beträgt 0.6 N/cm (frisch) bzw. 1.8 N/cm (nach Wechselklimalagerung). Auf Lack verklebte Muster wurden mit 97 kLy bewittert, nach dem Abziehen waren nur geringe Rückstände in der Fläche und sehr starke im Kantenbereich zu erkennen. Bei Verklebung auf frischem Lack sind im Kantenbereich geringfügige Deformationen des Lackes erkennbar.

## Patentansprüche

1. Selbstklebende Schutzfolie für die Außenseite von lackierten Fahrzeugen, insbesondere Automobilen, **dadurch gekennzeichnet, daß**
- der Träger der Schutzfolie eine Folie ist, die einseitig mit einer Klebmasse beschichtet ist,
- deren Klebkraft auf Stahl zwischen 0,2 und 2,8 N/cm liegt, wobei
- die Klebemasse ein Copolymer mit mindestens zwei verschiedenen α-Olefinen mit 2 bis 12 Kohlenstoffatomen sowie mindestens ein Dien als weiteres Comonomer enthält, wobei kein α-Olefin einen Anteil an der gesamten Klebemasse von 75 Mol-% oder mehr hat und das Copolymer eine Mooney-Viskosität ML (1+4) 125 °C unter 50 aufweist.

2. Selbstklebende Schutzfolie gemäß Anspruch 1, **dadurch gekennzeichnet, daß** der Anteil Dien in der Klebemasse zwischen 0,5 und 10 Gew.-% liegt.

3. Selbstklebende Schutzfolie gemäß Anspruch 1, **dadurch gekennzeichnet, daß** die UV-Durchlässigkeit im Bereich von 290 bis 360 nm unter 1 % liegt.

4. Selbstklebende Schutzfolie gemäß Anspruch 1, **dadurch gekennzeichnet; daß** das Copolymer der Klebemasse eine Mooney-Viskosität ML (1+4) 125 °C unter 30 aufweist.

5. Selbstklebende Schutzfolie gemäß Anspruch 1, **dadurch gekennzeichnet, daß** die Klebemasse vernetzt ist.

6. Selbstklebende Schutzfolie gemäß Anspruch 1, **dadurch gekennzeichnet, daß** in den Copolymer der Anteil an polaren Comonomeren unter 20 Mol-% liegt.

7. Selbstklebende Schutzfolie gemäß Anspruch 1, **dadurch gekennzeichnet, daß** sie mindestens ein Lichtschutzmittel enthält.

8. Selbstklebende Schutzfolie gemäß Anspruch 1, **dadurch gekennzeichnet, daß** sie mindestens ein Lichtschutzmittel der Klasse HALS enthält.

9. Selbstklebende Schutzfolie gemäß Anspruch 1, **dadurch gekennzeichnet, daß** in dem Copolymer kein α-Olefin mit mehr als 65 Mol-% enthalten ist.

10. Selbstklebende Schutzfolie gemäß Anspruch 1, **dadurch gekennzeichnet, daß** die Klebkraft auf Stahl zwischen 0,3 und 1,5 N/cm liegt.

11. Selbstklebende Schutzfolie gemäß Anspruch 1, **dadurch gekennzeichnet, daß** in dem Copolymer der Anteil jedes α-olefinischen Monomers zwischen 5 und 60 Mol-% liegt.

12. Selbstklebende Schutzfolie gemäß Anspruch 1, **dadurch gekennzeichnet, daß** die UV-Durchlässigkeit im Bereich von 290 bis 360 nm unter 0,1 % liegt und die Trägerfolie ein oder mehrere Lichtschutzmittel in einer Menge von mindesten 0,15 Gew.-% enthält.

13. Selbstklebende Schutzfolie gemäß Anspruch 1, **dadurch gekennzeichnet, daß** sich zwischen der Trägerfolie und der Klebemasse ein Haftvermittler befindet.

14. Selbstklebende Schutzfolie gemäß Anspruch 1, **dadurch gekennzeichnet, daß** die Kraft bei 10 % Dehnung in Längs- und in Querrrichtung jeweils 25 N/15 mm Breite nicht überschreiten.

15. Selbstklebende Schutzfolie gemäß Anspruch 1, **dadurch gekennzeichnet, daß** der Haftvermittler mindestens ein Polymer enthält, welches zu mindestens 50 Mol-% aus einem oder mehreren α-Olefinen besteht.

16. Selbstklebende Schutzfolie gemäß Anspruch 1, **dadurch gekennzeichnet, daß** die Trägerfolie mindestens ein Copolymer des Propylens enthält.

17. Selbstklebende Schutzfolie gemäß Anspruch 1, **dadurch gekennzeichnet, daß** die Klebemasse und die Trägerfolie durch simultane Coextrusion zu der Schutzfolie verbunden wird.

18. Verwendung einer Schutzfolie gemäß einem der Ansprüche 1 bis 13 auf gewölbten Flächen auf der Außenseite von Automobilen.

19. Verwendung einer Schutzfolie gemäß Anspruch 14, **dadurch gekennzeichnet, daß** die Schutzfolie auf lackierten Flächen vor der Fahrzeugmontage appliziert wird.

## Claims

1. Self-adhesive protective film for the exterior of painted vehicles, especially cars, **characterized in that**
- the backing of the protective film is a film coated on one side with an adhesive composition
- whose bond strength on steel is between 0.2 and 2.8 N/cm,
- the adhesive composition comprising a copolymer of at least two different α-olefins having 2 to 12 carbon atoms and at least one diene as further comonomer, no α-olefin having a proportion of 75 mol% or more in the adhesive composition as a whole, and the copolymer having a Mooney viscosity ML (1+4) 125°C of less than 50.

2. Self-adhesive protective film according to Claim 1, **characterized in that** the proportion of diene in the adhesive composition is between 0.5 and 10% by weight.

3. Self-adhesive protective film according to Claim 1, **characterized in that** the UV permeability in the range from 290 to 360 nm is less than 1%.

4. Self-adhesive protective film according to Claim 1, **characterized in that** the copolymer of the adhesive composition has a Mooney viscosity ML (1+4) 125°C of less than 30.

5. Self-adhesive protective film according to Claim 1, **characterized in that** the adhesive composition is crosslinked.

6. Self-adhesive protective film according to Claim 1, **characterized in that** the proportion of polar comonomers in the copolymer is less than 20 mol%.

7. Self-adhesive protective film according to Claim 1, **characterized in that** it comprises at least one light stabilizer.

8. Self-adhesive protective film according to Claim 1, **characterized in that** it comprises at least one light stabilizer of the HALS class.

9. Self-adhesive protective film according to Claim 1, **characterized in that** no more than 65 mol% of any α-olefin is present in the copolymer.

10. Self-adhesive protective film according to Claim 1, **characterized in that** the bond strength on steel is between 0.3 and 1.5 N/cm.

11. Self-adhesive protective film according to Claim 1, **characterized in that** the proportion of each α-olefinic monomer in the copolymer is between 5 and 60 mol%.

12. Self-adhesive protective film according to Claim 1, **characterized in that** the UV permeability in the range from 290 to 360 nm is less than 0.1% and the backing film comprises one or more light stabilizers in an amount of at least 0.15% by weight.

13. Self-adhesive protective film according to Claim 1, **characterized in that** there is an adhesion promoter between the backing film and the adhesive composition.

14. Self-adhesive protective film according to Claim 1, **characterized in that** the force at 10% extension does not exceed 25 N/15 mm width either in the lengthwise or in the transverse direction.

15. Self-adhesive protective film according to Claim 1, **characterized in that** the adhesion promoter comprises at least one polymer of which at least 50 mol% consists of one or more α-olefins.

16. Self-adhesive protective film according to Claim 1, **characterized in that** the backing film comprises at least one copolymer of propylene.

17. Self-adhesive protective film according to Claim 1, **characterized in that** the adhesive composition and the backing film are joined to the protective film by simultaneous coextrusion.

18. Use of a protective film according to one of Claims 1 to 13 [sic] on curved surfaces on the exterior of cars.

19. Use of a protective film according to Claim 14 [sic], **characterized in that** the protective film is applied to painted surfaces before the vehicle is assembled.

## Revendications

1. Feuille protectrice autoadhésive pour la face externe de véhicules vernis, en particulier d'automobiles, **caractérisée en ce que**
- le support de la feuille protectrice est une feuille, qui est revêtue sur une face d'une masse adhésive,
- dont la force adhésive sur l'acier se situe entre 0,2 et 2,8 N/cm,
- la masse adhésive contenant un copolymère avec au moins deux α-oléfines différentes, ayant de 2 à 12 atomes de carbone ainsi qu'au moins un diène en tant que comonomère supplémentaire, aucune α-oléfine n'ayant une proportion à la masse adhésive totale de 75 % en moles ou plus et le copolymère présentant une viscosité Mooney ML (1+4) à 125°C en dessous de 50.

2. Feuille protectrice autoadhésive selon la revendication 1, **caractérisée en ce que** la proportion de diène dans la masse adhésive se situe entre 0,5 et 10 % en poids.

3. Feuille protectrice autoadhésive selon la revendication 1, **caractérisée en ce que** la transmissibilité aux rayons UV dans le domaine de 290 à 360 nm se situe en dessous de 1 %.

4. Feuille protectrice autoadhésive selon la revendication 1, **caractérisée en ce que** le copolymère de la masse adhésive présente une viscosité Mooney ML (1+4) à 125°C en dessous de 30.

5. Feuille protectrice autoadhésive selon la revendication 1, **caractérisée en ce que** la masse adhésive est réticulée.

6. Feuille protectrice autoadhésive selon la revendication 1, **caractérisée en ce que** la proportion de comonomères polaires dans le copolymère se situe en dessous de 20 % en moles.

7. Feuille protectrice autoadhésive selon la revendication 1, **caractérisée en ce qu'**elle contient au moins un agent de protection contre la lumière.

8. Feuille protectrice autoadhésive selon la revendication 1, **caractérisée en ce qu'**elle contient au moins un agent de protection contre la lumière de la classe HALS.

9. Feuille protectrice autoadhésive selon la revendication 1, **caractérisée en ce qu'**aucune α-oléfine ayant plus de 65 % en moles n'est contenue dans le copolymère.

10. Feuille protectrice autoadhésive selon la revendication 1, **caractérisée en ce que** la force adhésive sur l'acier se situe entre 0,3 et 1,5 N/cm.

11. Feuille protectrice autoadhésive selon la revendication 1, **caractérisée en ce que**, dans le copolymère, la proportion de chaque monomère α-oléfinique se situe entre 5 et 60 % en moles.

12. Feuille protectrice autoadhésive selon la revendication 1, **caractérisée en ce que** la transmissibilité aux rayons UV dans le domaine de 290 à 360 nm se situe en dessous de 0,1 % et **en ce que** la feuille support contient un ou plusieurs agents de protection contre la lumière dans une quantité d'au moins 0,15 % en poids.

13. Feuille protectrice autoadhésive selon la revendication 1, **caractérisée en ce qu'**un agent promoteur de l'adhésion se trouve entre la feuille support et la masse adhésive.

14. Feuille protectrice autoadhésive selon la revendication 1, **caractérisée en ce que** la force pour une dilatation de 10 % dans la direction longitudinale et dans la direction transversale ne dépasse pas, à chaque fois, 25 N/15 mm de large.

15. Feuille protectrice autoadhésive selon la revendication 1, **caractérisée en ce que** l'agent promoteur de l'adhésion contient au moins un polymère, qui se compose jusqu'à au moins 50 % en moles d'une ou de plusieurs α-oléfines.

16. Feuille protectrice autoadhésive selon la revendication 1, **caractérisée en ce que** la feuille support contient au moins un copolymère du propylène.

17. Feuille protectrice autoadhésive selon la revendication 1, **caractérisée en ce que** la masse adhésive et la feuille support sont liées par coextrusion simultanée à la feuille protectrice.

18. Utilisation d'une feuille protectrice selon l'une quelconque des revendications 1 à 13 sur des surfaces courbées de la face externe d'automobiles.

19. Utilisation d'une feuille protectrice selon la revendication 14, **caractérisée en ce que** le feuille protectrice est appliquée sur des surfaces vernies avant le montage du véhicule.
